# EUROPEAN PATENT SPECIFICATION

(11) **EP 1 977 962 B1**
(45) Date of publication and mention of the grant of the patent: **28.04.2010**
(21) Application number: 07007096.6
(22) Date of filing: 04.04.2007
(51) Int. Cl.: B62J 1/02

(54) **Bicycle saddle assembly**
Fahrradsattelanordnung
Ensemble de selle de bicyclette

(43) Date of publication of application: 08.10.2008
(73) Proprietor: Velo Enterprise Co., Ltd., Dajia Township, Taichung County 437 (TW)
(72) Inventor: Hung, Chun-Fu, Taichung County 437 (TW)
(74) Representative: Becker Kurig Straus

(56) References cited:
- US-A1- 2005 029 842
- US-B1- 6 343 836
- US-B1- 7 059 673

## Description

### BACKGROUND OF THE INVENTION

### 1. Field of the Invention

The present invention generally relates to bicycle saddles, particularly to a bicycle saddle with a suspension means appropriately positioned and constructed to be lightweight and to absorb shock and damp vibration effectively, omnidirectionally and evenly during bicycle riding.

### 2. Description of the Related Art

It is well known that sprung bicycle saddles had been developed to absorb shock produced during riding. These saddles typically include a seat body and a pair of coir-spring suspension means arranged respectively on the underside of the seat body to attenuate the shock load. However, such arranged coil-spring suspension means can only absorb shock coming from unidirection. In other words, such arranged coil-spring suspension means can not absorb shock coming from omnidirection. In addition, for having a complicated structure, sprung saddles are too heavy to be suitable for regular bicycles, not practical for racing bicycles or mountain bikes.

To solve the disadvantages of the conventional sprung bicycle saddles, US patent application under the publication No. US 2005/029842 A1 discloses an improved saddle assembly according to the preamble of claim 1. However, the patent application did not teach how to size and position the pneumatic suspension to have a bicycle saddle assembly being lightweight and capable absorbing shock and damping vibration effectively, omnidirectionally and evenly.

Accordingly, an improved bicycle saddle assembly provided a suspension means appropriately constructed and positioned to be lightweight and to absorb shock and damp vibration effectively, omnidirectionally and evenly is desired.

### SUMMARY OF THE INVENTION

Therefore, a bicycle saddle assembly comprises a seat body, a supporting rail, and a suspension means. The seat body includes a relatively narrow anterior portion, a relatively wider posterior portion for supporting a bicycle rider's buttocks. The seat body further includes a longitudinal axis (X-X') to divide said seat body into two symmetrical portions, and a pressure receiving center (H) located on the wider posterior portion and passed through by said longitudinal axis (X-X'), a distance between the pressure receiving center and the rear end of the seat body being one half to one fifth of the length of said seat body measured from the front end of the seat body to the rear end.

The supporting rail for mounting the seat body to a bicycle has a first rear end, a second rear end, and a front end. The front end is engaged on the underside of the anterior portion of the seat body, and said first and second rear ends extending from said front end along a longitudinal axis of the seat body to an area under said wider posterior portion. The suspension means absorb shock and damp vibration transferred from a bicycle body during riding. The suspension means is disposed exactly under the pressure receiving center of said seat body and is coupled with the first and second rear ends of the suspension rail.

The suspension means comprises a first positioning base connecting to the first and second rear ends of the suspension rail in such a way that a space is formed between the underside of the wider posterior portion of the seat body and the first positioning base, wherein a central hollow post formed as a unit with said first positioning base extends up from an upper surface of said first positioning base. Further, a resilient and deformable member having a predetermined thickness and a center opening located on said space; and a positioning strut which extends downwardly from said pressure receiving center of the wider posterior portion in such a way that a free end of said positioning strut passes through said center opening of said resilient and deformable member and is coupled with the first positioning base in such a way that said seat body can be slidable relative to the said first positioning base.

The suspension means further comprises a second positioning base disposed on the underside of the wider posterior portion of the seat body such that said resilient and deformable member can be sandwichedly received between the first positioning base and the second positioning base.

The second positioning base has a surface with an upper annular depression and the first positioning base has an upper surface with a bottom annular depression to cooperate with said upper annular depression of said second positioning base in order to receive the resilient and deformable member.

### BRIEF DESCRIPTION OF THE DRAWINGS

Other features and advantages of the present invention will become apparent in the following detailed description of the preferred embodiment with reference to the accompanying drawings, of which:
FIG. 1 is a perspective view of an embodiment of the present invention;

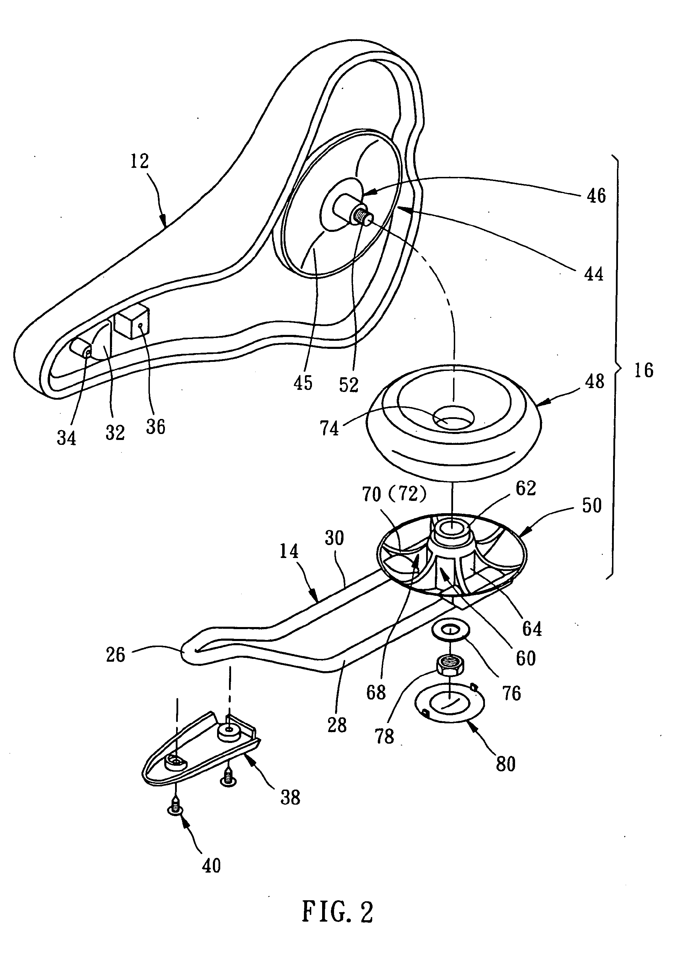

FIG. 2 is an exploded view of the embodiment of FIG. 1;

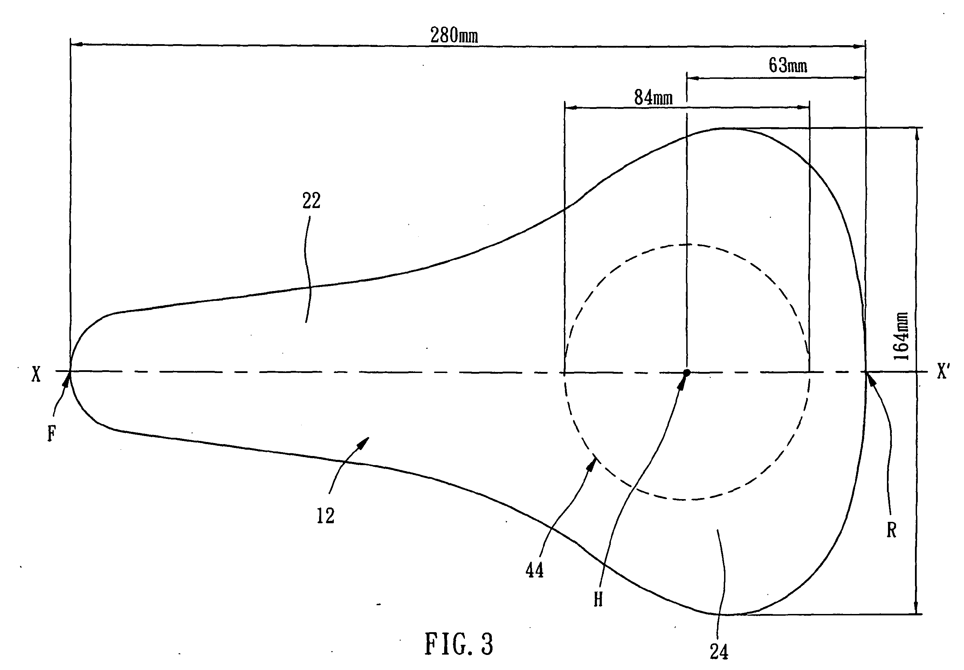

FIG. 3 is a top view of the embodiment of FIG. 1;

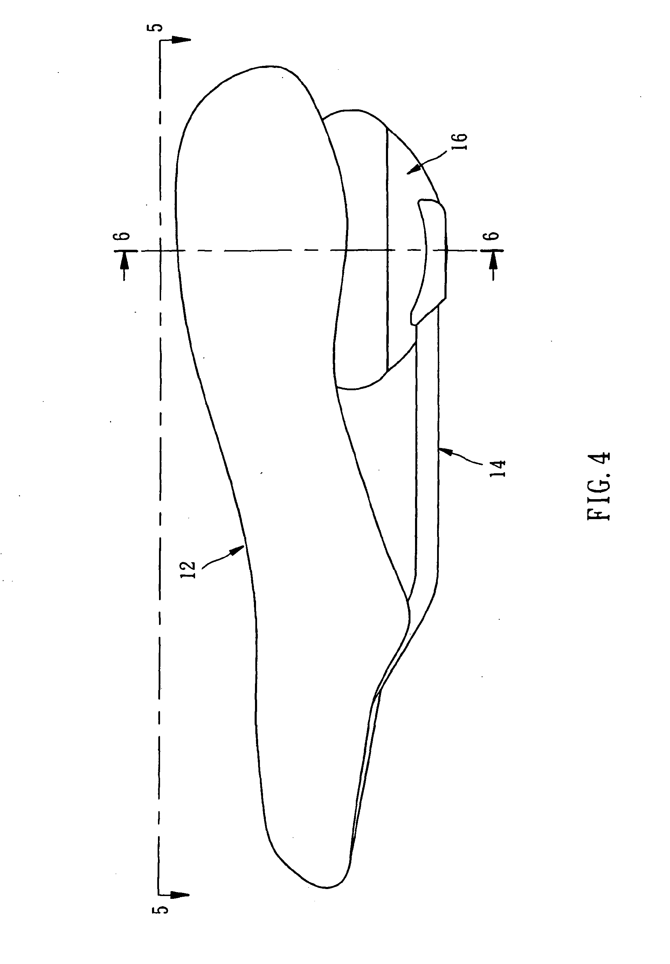

FIG. 4 is a side view of the embodiment of FIG.1;
FIG. 5 is a cross-sectional view taken along line 5-5 of FIG. 3; and

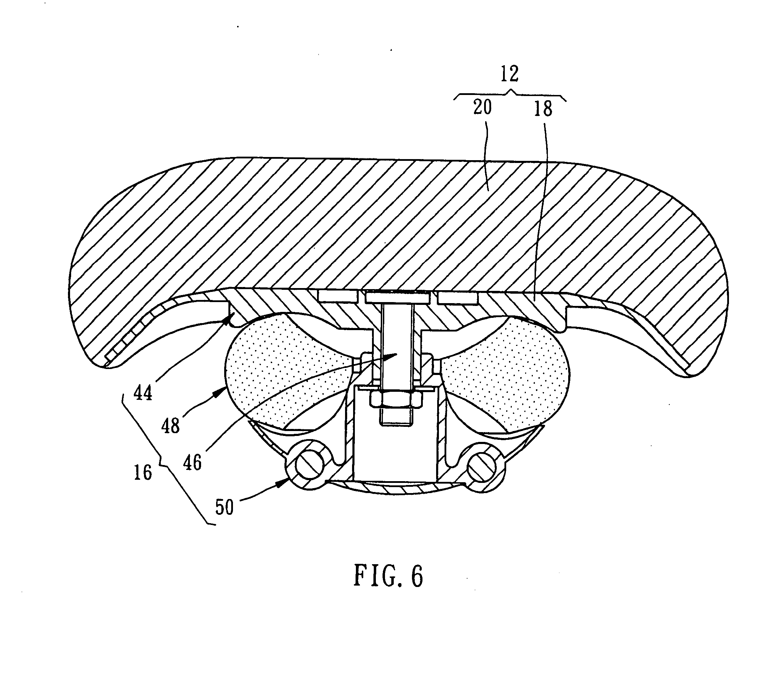

FIG. 6 is a cross-sectional view taken along line 6-6 of FIG. 4.

### DETAILED DESCRIPTION OF THE INVENTION

Referring to the drawings, there are shown a bicycle saddle assembly 10 including a seat body 12, a supporting rail 14 for mounting seat body 12 onto a bicycle, and a suspension means 16 for damping vibration and absorbing shock produced during bicycle riding.

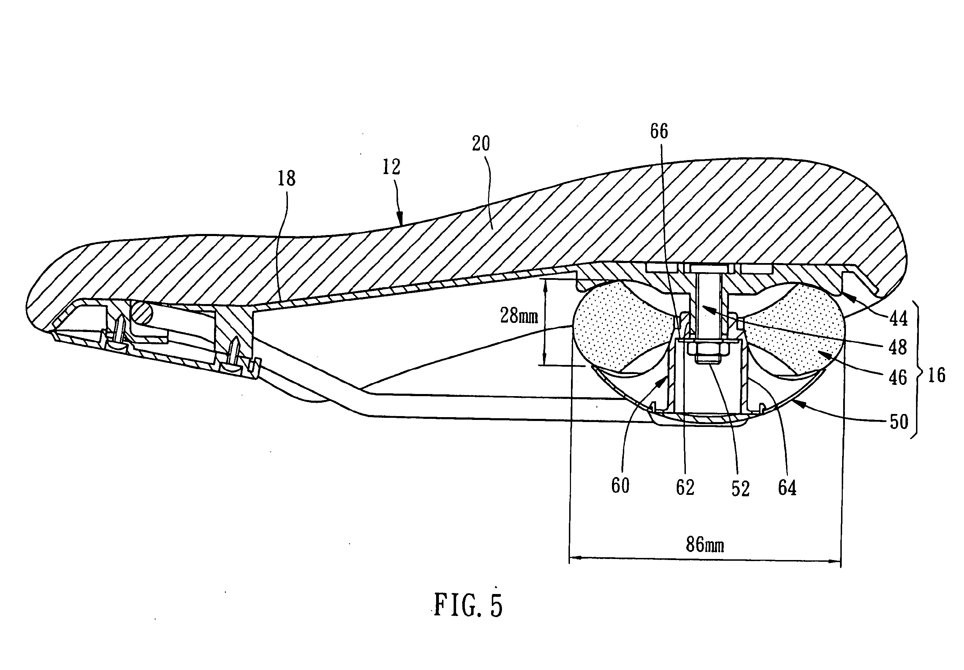

The seat body 12 includes a shell 18 and a padding 20 covering the shell 18 (as shown in FIG. 5). The shell 18 is made of a relatively stiff, yet slightly flexible, plastic material. The shell 18 is shaped to have a relatively narrow anterior portion 22, which becomes progressively narrower towards its front end to fit between a bicycle rider's crotch, a relatively wide posterior portion 24 for supporting a bicycle rider's buttocks, a longitudinal axis X-X' to divide the seat body 12 into two symmetrical portions, and a pressure receiving center H located on the wider posterior portion 24 and passed through by the longitudinal axis X-X'.

The length of the seat body 12 measured from the exactly front end F to the exactly rear end R is about 280 mm. The distance between the pressure receiving center H and the exactly rear end R of the seat body is about 63 mm which about equals to one fifth of the length of the shell 18.

The padding 20 is made of a plastic foam material and covers the entire seating surface of the shell 18. The padding 20 may be further covered with leather or other suitable material.

The supporting rail 14 is made of any suitable material, but preferably a lightweight metal. It has a U- shape front end 26, a first rear end 28, and a second rear end 30. The first rear end 28 and second rear end 30 extends respectively from the front end 26 along the longitudinal axis X-X' to an area under the wider posterior portion 24. The front end 26 of the rail 14 is attached to the shell 18 by an anterior coupling means underneath the anterior portion 22 of the seat body 12. Several methods may be employed to attach the closed end 26 of the rail 14 to the anterior portion 22 of the seat body 12. In this embodiment, as shown in the drawings, the anterior coupling means may comprise a socket 32, a first and second positioning piece 34, 36, which are molded directly into the shell 18. The anterior coupling means further comprises a cover plate 38 covering the front end 26 of the rail 14 and a pair of screws 40 that extend through the cover plate 38 and engage threadedly with the positioning pieces 34, 36 so as to attach the front end 26 of the rail 14 to the shell 18.

The suspension means 16 includes an upper positioning base 44, a positioning strut 46, a resilient and deformable member 48 and a bottom positioning base 50.

The upper positioning base 44, in this embodiment, is molded directly into the underside of the shell 18. The base 44 is disk-shaped with a diameter about 84 mm which about equals to one half of the width of the widest area of the shell 18. The center of the base 44 is located at the pressure receiving center H. The under surface of the upper base 44 defines a first annular depression 45.

The positioning strut 46 is disposed on the center of the upper positioning base 44 and has a threaded free end 52 downwardly extending from the center of the upper positioning base 44.

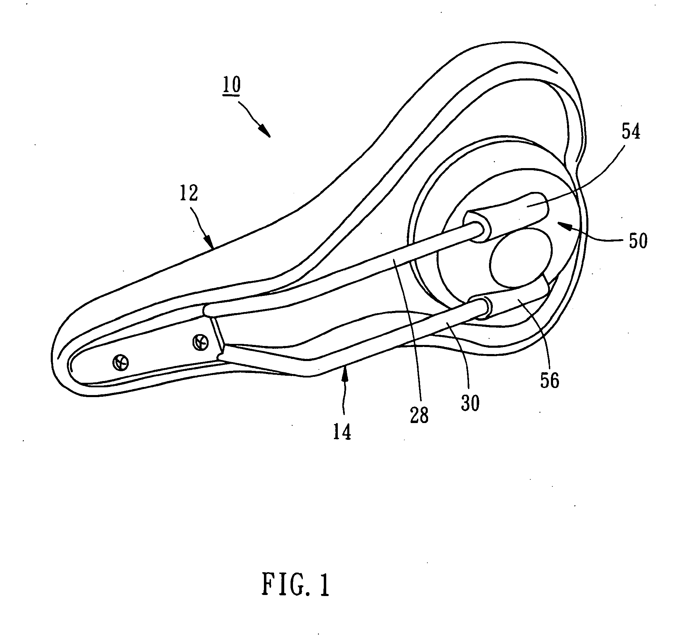

The bottom positioning base 50 is sized as the upper positioning base 44. The base 50 has a first and second rear sockets 54, 56 (as shown in FIG. 1) located on the bottom side thereof to receive the first and second rear ends 28, 30 of the rail 14. The base 50 further has a hollow central post 60 upwardly extending from the upper surface thereof. The hollow central post 60 has a first portion 62 and a second portion 64. The diameter of the first portion 62 is smaller than that of the second portion 64 so as to form an annular shoulder 66 therebetween. The surface of the base 50 has six ribs 68 disposed in equidistance. Each of the ribs 68 extends from the outward wall of the post 60 to the edge of the base 50 and has a cured upper end 70 so as to form a second annular depression 72 on the upper surface of the base 50.

The resilient and deformable member 48 can be a ring made of plastic materials or a pneumatic member and have a diameter about equal to one half of the width of the widest area of the seat body 12. In this embodiment, the resilient and deformable member 48 is a rubber ring with a central hole 74, a maximum thickness about 28 mm, and a diameter about 86 mm.

When constructing, the resilient and deformable member 48 is received between the first annular depression 45 of the upper base 44 and the second annular depression 72 of the bottom base 50 such that the hollow central post 60 can run through the central hole 74 of the device 48 and the positioning strut 46 then passes through the hollow central post 60 and is captured by a washer 76 and a nut 78. In this embodiment, the washer 76 is leaned against the annular shoulder 66. The nut 78 is threadedly engaged with the threaded end 52 of the positioning strut 46. And then a bottom cover 80 covers the bottom end of the hollow central post 60.

Whereby, as the supporting rail 14 is attached to a bicycle body, the seat body 12 is slidable relative to the bottom positioning base 50 at the pressure receiving center H so that the shock and/or vibration transferring from any direction during bicycle riding can be mostly absorbed by the resilient and deformable member 48.

Furthermore, for the resilient and deformable member 48 being sized to have a diameter about equal to one half of the width of the widest area of the shell 18 and received between the upper and bottom position bases 44, 50, the shock and the vibration transferring from a bicycle body during riding can be effectively, evenly and omnidirectionally absorbed and damped.

## Claims

1. A bicycle saddle assembly (10), comprising:
a seat body (12) including a relatively narrow anterior portion (22), a relatively wider posterior portion (24) for supporting a bicycle rider's buttocks, said seat body (12) further including a longitudinal axis (X-X') to divide said seat body into two symmetrical portions, and a pressure receiving center (H) located on said wider posterior portion (24) and passed through by said longitudinal axis (X-X'), a distance between said pressure receiving center (H) and the rear end (R) of said seat body (12) being one half to one fifth of the length of said seat body (12) measured from the front end (F) of said seat body (12) to the rear end (R);
a supporting rail (14) for mounting said seat body (12) to a bicycle, said rail having a first rear end (28), a second rear end (30), and a front end (26), said front end (26) being engaged on the underside of said anterior portion (22) of said seat body (12), said first and second rear ends (28, 30) extending from said front end (26) along a longitudinal axis (X-X') of said seat body (12) to an area under said wider posterior portion (24);
a suspension means (16) to absorb shock and damp vibration transferred from a bicycle body during riding, said suspension means (16) exactly disposed under said pressure receiving center (H) of said seat body (12) and coupled with said first and second rear ends (28, 30) of said suspension rail;
said suspension means (16) comprises:
a first positioning base (50) connecting to said first and second rear ends (28, 30) of said suspension rail in such a way that a space is formed between the underside of said wider posterior portion (24) of said seat body (12) and said first positioning base (50), wherein a central hollow post formed as a unit with said first positioning base extends up from an upper surface of said first positioning base;
a resilient and deformable member (48) having a predetermined thickness and a center opening, said resilient and deformable member (48) being located on said space; and
a positioning strut (46) downwardly extending from said pressure receiving center (H) of said wider posterior portion (24) in such a way that a free end (52) of said positioning strut (46) passes through said center opening of said resilient and deformable member and is coupled with said first positioning base (50) in such a way that said seat body (12) can be slidable relative to the said first positioning base (50),
said suspension means (16) further comprising a second positioning base (44) disposed on the underside of said wider posterior portion (24) of said seat body (12) such that said resilient and deformable member (48) can be sandwichedly received between said first positioning base (50) and second positioning base (44),
**characterized in that** said second positioning base (44) has a surface with an upper annular depression (45) and said first positioning base (50) has an upper surface with a bottom annular depression (72) to cooperate with said upper annular depression (45) of said second positioning base (44) to receive said resilient and deformable member (48).

2. The bicycle saddle assembly (10) as claimed in claim 1, wherein said resilient and deformable member (48) is ring-shaped.

3. The bicycle saddle assembly (10) as claimed in claim 2, wherein said resilient and deformable member (48) has a diameter equal to one half of the width of the widest area of said seat body.

4. The bicycle saddle assembly (10) as claimed in claim 1, wherein said first and second positioning bases (50, 44) are disk-shaped.

5. The bicycle saddle assembly (10) as claimed in claim 1, wherein said second positioning base (44) is formed directly on the underside of said wider posterior portion (24) of said seat body and has a center located on said pressure receiving center (H) of said seat body.

6. The bicycle saddle assembly (IQ) as claimed in claim 1, wherein said first positioning base (50) further has a plurality of ribs (68) spacedly formed on an upper surface thereof, each of said ribs (68) has a curve-shaped free end (70) to define said bottom annular depression (72) of said upper surface of said first positioning base (50).

## Patentansprüche

1. Fahrradsattelanordnung (10), umfassend:
einen Sitzkörper (12), umfassend einen relativ engen vorderen Bereich (22), einen relativ breiteren hinteren Bereich (24), um die Gesäßbacken des Fahrradfahrers zu stützen,
wobei der Sitzkörper (12) weiterhin eine Längsachse (X-X') umfasst, um den Sitzkörper in zwei symmetrische Bereiche zu teilen, und eine Druck aufnehmende Mitte (H), die an dem breiteren hinteren Bereich (24) angeordnet ist und durch die die Längsachse (X-X') verläuft,
wobei ein Abstand zwischen der Druck aufnehmenden Mitte (H) und dem Hinterende (R) des Sitzkörpers (12), die Hälfte bis ein Fünftel der Länge des Sitzkörpers (12) umfasst, gemessen von dem Vorderende (F) des Sitzkörpers (12) zu dem Hinterende (R),
eine Stützschiene (14) zum Anbringen des Sitzkörpers (12) an einem Fahrrad, wobei die Schiene ein erstes Hinterende (28), ein zweites Hinterende (30) und ein Vorderende (26) aufweist, wobei das Vorderende (26) mit der Unterseite des vorderen Bereichs (22) des Sitzkörpers (12) im Eingriff steht, wobei sich das erste und zweite Hinterende (28, 30) von dem Vorderende (26) entlang der Längsachse (X-X') des Sitzkörpers (12) zu einem Bereich unter dem breiteren hinteren Bereich (24) erstrecken,
ein Aufnahmemittel (16), um Stöße zu absorbieren und Schwingungen zu dämpfen, die während des Fahrens von einem Fahrradkörper übertragen werden, wobei die Aufnahmemittel (16) genau unter der Druck aufnehmenden Mitte (H) des Sitzkörpers (12) angeordnet und mit dem ersten und zweiten Hinterende (28, 30) der Stützschiene gekoppelt sind,
worin das Aufnahmemittel (16) umfasst:
eine erste Positionierungsbasis (50), die mit dem ersten und zweiten Hinterende (28, 30) der Stützschiene in der Weise verbunden ist, dass ein Raum zwischen der Unterseite des breiteren hinteren Bereichs (24) des Sitzkörpers (12) und der ersten Positionierungsbasis (50) gebildet wird, wobei ein zentraler Hohlstab, der als eine Einheit mit der ersten Positionierungsbasis gebildet wird, sich von einer oberen Oberfläche der ersten Positionierungsbasis erstreckt,
ein elastisches und verformbares Element (48), das eine bestimmte Dicke und eine Zentralöffnung aufweist, wobei das elastische und verformbare Element (48) an dem Raum angeordnet ist, und
ein Positionierungssteg (46), der sich von der Druck aufnehmenden Mitte (H) des breiteren hinteren Bereichs (24) in derartiger Weise nach unten erstreckt, dass das freie Ende (52) des Positionierungsstegs (46) durch die Zentralöffnung des elastischen und verformbaren Elements verläuft und mit der ersten Positionierungsbasis (50) auf derartige Weise gekoppelt ist, dass der Sitzkörper (12) relativ zu der ersten Positionierungsbasis (50) verschoben werden kann,
wobei das Aufnahmemittel (16) weiter eine zweite Positionierungsbasis (44) umfasst, die an der Unterseite des breiteren hinteren Bereichs (24) des Sitzkörpers (12) angeordnet ist, so dass das elastische und verformbare Element (48) zwischen der ersten Positionierungsbasis (50) und der zweiten Positionierungsbasis (44) eingeschoben aufgenommen werden kann,
**dadurch gekennzeichnet, dass** die zweite Positionierungsbasis (44) eine Oberfläche mit einer oberen ringförmigen Furche (45) aufweist und die erste Positionierungsbasis (50) eine obere Oberfläche mit einer unteren ringförmigen Furche (72) aufweist, um mit der oberen ringförmigen Furche (45) der zweiten Positionierungsbasis (44) zusammenzuarbeiten, um das elastische und verformbare Element (48) aufzunehmen.

2. Fahrradsattelanordnung (10) nach Anspruch 1, worin das elastische und verformbare Element (48) ringförmig ist.

3. Fahrradsattelanordnung (10) nach Anspruch 2, worin das elastische und verformbare Element (48) einen Durchmesser aufweist, der der Hälfte der Breite des breitesten Bereichs des Sitzkörpers gleicht.

4. Fahrradsattelanordnung (10) nach Anspruch 1, worin die erste und zweite Positionierungsbasis (50, 44) scheibenförmig sind.

5. Fahrradsattelanordnung (10) nach Anspruch 1, worin die zweite Positionierungsbasis (44) unmittelbar an der Unterseite des breiteren hinteren Bereichs (24) des Sitzkörpers ausgebildet ist und eine Mitte aufweist, die an der Druck aufnehmenden Mitte (H) des Sitzkörpers angeordnet ist.

6. Fahrradsattelanordnung (10) nach Anspruch 1, worin die erste Positionierungsbasis (50) weiterhin mehrere Rippen (68) aufweist, die an einer oberen Oberfläche davon beabstandet ausgebildet sind, wobei jede der Rippen (68) ein bogenförmiges freies Ende (70) aufweist, um die untere ringförmige Furche (72) der oberen Oberfläche der ersten Positionierungsbasis (50) zu definieren.

## Revendications

1. Un ensemble de selle de bicyclette (10) comprenant :
un corps de siège (12) comportant une partie antérieure (22) relativement étroite, une partie postérieure (24) relativement plus large pour supporter les fesses d'un cycliste, ledit corps de siège (12) comprenant en outre un axe longitudinal (X-X') pour diviser ledit corps de siège en deux parties symétriques et un centre récepteur de pression (H) logé sur ladite partie postérieure plus large (24) et traversé par ledit axe longitudinal (X-X'), une distance entre ledit centre récepteur de pression (H) et l'extrémité arrière (R) dudit corps de siège (12), mesurée à partir de l'extrémité avant (F) dudit corps de siège (12) à l'extrémité arrière (R) représentant une demi à un cinquième de la longueur dudit corps de siège (12) ;
un rail de support (14) pour le montage dudit corps de siège (12) à la bicyclette, ledit rail comportant une première extrémité arrière (28), une seconde extrémité arrière (30) et une extrémité avant (26), ladite extrémité avant (26) étant engagée sur la face inférieure de ladite partie antérieure (22) dudit corps de siège (20), lesdites première et seconde extrémités arrières (28, 30) s'étendant de ladite extrémité avant (26) le long d'un axe longitudinal (X-X') dudit corps de siège (12) à une zone sous ladite portion postérieure plus large (24) ;
un moyen de suspension (16) pour absorber le choc et la vibration humide transférées à partir de la bicyclette durant le déplacement à bicyclette, ledit moyen de suspension (16) étant disposé exactement sous le centre récepteur de pression (H) dudit corps de siège (12) et accouplé auxdites première et seconde extrémités arrière (28, 30) dudit rail de suspension ; ledit moyen de suspension comprend :
une première base de positionnement (50) se connectant auxdites première et seconde extrémités arrière (28, 30) dudit rail de suspension de manière telle qu'un espace est formé entre la face inférieure de ladite partie postérieure plus large (24) dudit corps de siège (12) et ladite première base de positionnement (50) dans laquelle un poteau creux central forme comme une unité avec ladite première base de positionnement s'étend vers le haut à partir d'une surface supérieure de ladite première base de positionnement ;
un membre élastique et déformable (48) ayant une épaisseur prédéfinie et une ouverture centrale, ledit membre élastique et déformable (48) étant logé sur ledit espace ; et
une plaquette de positionnement (46) s'étendant vers le bas à partir dudit centre récepteur de pression (H) de ladite partie postérieure plus large (24) de manière telle qu'une extrémité libre (52) de ladite plaquette de positionnement (46) passe au travers de ladite ouverture centrale dudit membre élastique et déformable et est accouplée à ladite première base de positionnement (50) de manière telle que ledit corps de siège (12) puisse être coulissant par rapport à ladite première base de positionnement (50), ledit moyen de suspension (16) comprenant en outre une seconde base de positionnement (44) disposée à la face inférieure de ladite partie postérieure plus large (24) dudit corps de siège (12) telle que ledit membre élastique et déformable (48) puisse être pris en sandwich entre lesdites première base de positionnement (50) et seconde base de positionnement (44),
**caractérisé en ce que** ladite seconde base de positionnement (44) comporte une face avec une dépression annulaire supérieure (45) et ladite première base de positionnement (50) comporte une face supérieure avec une dépression annulaire inférieure (72) pour coopérer avec ladite dépression annulaire supérieure (45) de ladite seconde base de positionnement (44) pour recevoir ledit membre élastique et déformable (48).

2. L'ensemble de selle (10) tel que revendiqué dans la revendication 1 dans lequel le membre élastique et déformable (48) est de forme annulaire.

3. L'ensemble de selle (10) tel que revendiqué dans la revendication 2 dans lequel ledit membre élastique et déformable (48) possède un diamètre équivalant à une moitié de la largeur de la zone la plus large dudit corps de siège.

4. L'ensemble de selle (10) tel que revendiqué dans la revendication 1 dans lequel lesdites première et seconde bases de positionnement (50, 44) sont en forme de disque.

5. L'ensemble de selle (10) tel que revendiqué dans la revendication 1 dans lequel ladite seconde base de positionnement (44) est formée directement sur la face inférieure de ladite partie postérieure plus large (24) dudit corps de siège et comporte un centre logé sur ledit centre récepteur de pression (H) dudit corps de siège.

6. L'ensemble de selle (10) tel que revendiqué dans la revendication 1 dans lequel ladite première base de positionnement (50) comporte en outre une pluralité de nervures (68) formées espacées sur une face supérieure de celle-ci, chacune desdites nervures (68) comportant une extrémité libre (70) en forme de courbe pour définir ladite dépression inférieure (70) de ladite face supérieure de ladite première base de positionnement (50).
